# EUROPÄISCHE PATENTSCHRIFT

(11) **EP 0 894 541 B1**
(45) Veröffentlichungstag und Bekanntmachung des Hinweises auf die Patenterteilung: **29.11.2000**
(21) Anmeldenummer: 98112513.1
(22) Anmeldetag: 07.07.1998
(51) Int. Cl.: B05D 5/08, C09D 127/18

(54) **Gegenstand mit einer Antihaftbeschichtung**
Article with a non-stick coating
Articles à revêtement anti-adhésif

(30) Priorität: 31.07.1997 DE 19732945
(43) Veröffentlichungstag der Anmeldung: 03.02.1999
(73) Patentinhaber: Weilburger Lackfabrik J. Grebe GmbH, D-35781 Weilburg (DE)
(72) Erfinder: Herber, Jürgen, Dr., Dipl.-Chemiker, 35394 Giessen (DE)
(74) Vertreter: Weber, Dieter, Dr.

(56) Entgegenhaltungen:
- EP-A- 0 657 514
- WO-A-92/10309
- WO-A-94/14904

## Beschreibung

Die Erfindung betrifft Beschichtungssysteme für Koch-, Back- und Bratartikel, die antihaftende Eigenschaften aufweisen. Insbesondere bezieht sich die Erfindung auf mehrschichtige Antihaftbeschichtungen, die keine aufwendige Substratvorbehandlung, wie mechanische oder chemische Aufrauhung, voraussetzen.

Alle seither kommerziell verfügbaren Fluorpolymerdispersionen besitzen eine monomodale Teilchengrößenverteilung, d. h. eine Teilchengrößenverteilung, die um eine einzige mittlere Teilchengröße meist in Form einer Gauß'schen Glockenkurve schwankt. Schon längere Zeit wird vermutet, daß für die Substrathaftung von Beschichtungszusammensetzungen auf Basis Bindeharz und Fluorpolymer die Ausbildung einer Schichtenstruktur während der Trocknung verantwortlich ist. Dabei orientiert sich das Bindeharz verstärkt zur Substratoberfläche, während das Fluorpolymer mehr hin zu der sichtbaren Oberfläche tendiert (EP-A-0 056 280, EP-A-0 561 981). Diese Anreicherung an Bindeharz auf der dem Substrat zugewandten Seite der Beschichtung ist für die Substrathaftung der Grundschicht (Primerschicht) verantwortlich, und diese wiederum ist sowohl bei zweischichtigen Aufbauten mit einer auf Fluorpolymer basierenden Deckschicht als auch bei drei- oder mehrschichtigen Systemen mit mindestens einer fluorpolymerhaltigen Schicht, die zwischen Primer und die den Beschichtungsabschluß bildenden Deckschicht aufgetragen wird, zuständig für eine ausreichende Substrathaftung des Gesamtsystems.

Frühere Beschichtungszusammensetzungen verwendeten nichtschmelzende Fluorpolymere in Kombination mit Bindeharzen (EP-A-0 022 257), wobei die Fluorpolymere nur eine um einen Mittelwert schwankende Teilchengrößenverteilung aufwiesen. Da bei diesen Zusammensetzungen keine ausgeprägte Ausbildung der haftungsverbessernden Schichtenstruktur erzeugt wurde, mußten die zu beschichtenden Substrate mechanisch oder chemisch aufgerauht werden. Durch diese Vergrößerung der Substratoberfläche und infolge der nunmehr vorhandenen Hinterschneidungen wurde eine für den praktischen Gebrauch ausreichende Haftfestigkeit des Primers und damit bei Mehrschichtaufbauten der Gesamtbeschichtung erreicht.

Durch Verwendung von thermoplastischen, monomodalen Fluorpolymeren, wie PFA (Copolymer aus Perfluoralkylvinylether und Tetrafluorethylen) oder FEP (Copolymer aus Hexafluorpropylen und Tetrafluorethylen), die während der Trocknung der Beschichtung schmelzen, konnte in Kombination mit monomodalem, nicht aus der Schmelze verarbeitbarem Polytetrafluorethylen (PTFE) eine Verbesserung der Substrathaftung erzielt werden (EP-A-0 056 280, EP-A-0 561 981). Ein synergistischer Effekt dieser Kombination von nichtschmelzbarem PTFE und den genannten, für den direkten Lebensmittelkontakt zugelassenen thermoplastischen Fluorpolymeren, bewirkte durch die niedrigere Schmelzviskosität der Fluorthermoplasten eine verbesserte Schichtenbildung derart, daß durch einen verbesserten Konzentrationsgradienten von Fluorpolymer und Bindeharz in der Beschichtung eine noch höhere Konzentration des für die Substrathaftung verantwortlichen Bindeharzes auf der Substratoberfläche erzeugt werden konnte. Dieser für die Substrathaftung positive Effekt wurde nicht nur unter Hinzunahme von Tetrafluorethylencopolymeren (TFE-Copolymere) beobachtet, sondern auch bei der Verwendung von zwei PTFE-Typen unterschiedlicher molekularer Masse und damit unterschiedlicher Schmelzviskosität (EP-A-0 561 987). Die hier zitierten Veröffentlichungen haben eine Gemeinsamkeit derart, daß der Anteil an thermoplastischem Fluorpolymer ausgehend von der Grundschicht über die Mittelschicht bis hin zur Deckschicht abnimmt, der höchste Anteil an schmelzfähigem Fluorpolymer somit in der Grundschicht zu finden ist. Dieser Konzentrationsgradient an schmelzbarem Fluorpolymer mit der Abnahme hin zur Deckschicht bewirkt eine Verbesserung der Substrathaftung und führt zu einer höheren chemischen Resistenz der Beschichtungen.

Durch diese Beschichtungszusammensetzungen konnte die Rauhtiefe der zu beschichtenden Substrate und damit die für die Substrathaftung zur Verfügung stehende Oberfläche verringert werden. Dies führt zu deutlichen Kosteneinsparungen bei der Substratvorbehandlung. Die Verringerung der von der Vorbehandlung herrührenden Abfallmengen ist auch aus Umweltschutzgesichtspunkten wünschenswert. Während die Verwendung der hier genannten Fluorpolymermischungen deutliche Vorteile bezüglich der Substrathaftung erbrachte, führte auf der anderen Seite der hohe Anteil an thermoplastischem Fluorpolymer zu einer Verminderung der Härte der Antihaftbeschichtung, insbesondere bei Gebrauchstemperaturen der Koch-, Back- und Bratgeräte von 180 bzw. 250 °C. Darüber hinaus muß der Verarbeiter und letztlich der Verbraucher hohe Materialkosten und damit hohe Produktkosten akzeptieren, da sowohl FEP als auch insbesondere PFA erheblich höhere Herstellungskosten als PTFE verursachen.

Die Erzeugung eines für die Substrathaftung notwendigen Konzentrationsgradienten zwischen Bindeharzen, z. B. Polyamidimid (PAI)-, Polyphenylensulfid (PPS)-, Polyethersulfon (PES)- oder Siliconharzen, und Fluorpolymeren kann im Prinzip auch durch Grundschichtformulierungen erreicht werden, die einen höheren Anteil an Bindeharz gegenüber dem Fluorpolymeren enthalten (EP-A-0 669 384). Die dort beschriebenen Grundschichtzusammensetzungen benötigen durch die Verwendung von monomodalem, nichtschmelzbarem PTFE für eine ausreichende Substrathaftung in Kombination mit einem Bindeharz sehr hohe Anteile an Bindeharz, die bis zu einem vierfachen gewichtsmäßigen Überschuß des Bindeharzanteils gegenüber dem PTFE-Anteil reichen. Solche Grundschichtzusammensetzungen weisen den entscheidenden Nachteil auf, daß durch den geringen Fluorpolymergehalt die Zwischenhaftung der Grundschicht zu nachfolgenden, auf Fluorpolymer basierenden Deckschichten vermindert ist und damit der Verbund von mehrlagigen Antihaftbeschichtungen geschwächt ist.

Ein weiterer Weg zur Erzeugung einer auf gering aufgerauhten Substraten ausreichenden Substrathaftung besteht in der Verwendung einer fluorpolymerfreien Primerschicht, die nur Bindeharz oder eine Mischung von Bindeharzen enthält (WO 91/02773, DE-A-2 754 83)). Auf diese Grundschicht werden anschließend fluorpolymerhaltige Schichten auflackiert. Dieser Beschichtungsaufbau bedingt zum einen hohe Vortrocknungstemperaturen dieser Grundschichten und weist zum anderen eine im höchsten Maße ineffiziente Zwischenhaftung der Grundschicht zu den nachfolgenden fluorpolymerhaltigen Deckschichten auf.

Allen hier zitierten Veröffentlichungen liegt das übergeordnete Prinzip eines Konzentrationsgradienten von Bindeharz und Fluorpolymer zugrunde. Dieser Konzentrationsgradient, der im Primer zu einer die Substrathaftung erzeugenden Anreicherung des Bindeharzes auf der Substratoberfläche führt, kann insbesondere auf Substraten, die durch eine geringe Oberflächenrauhigkeit keine effektive Verankerungsmöglichkeiten für die Antihaftgrundschicht bereitstellen, nur durch die Mischung von Bindeharz mit Fluorpolymeren unterschiedlicher Schmelzviskosität oder durch einen hohen Anteil an Bindeharz erreicht werden. Beide Verfahren weisen die beschriebenen Nachteile auf. Die Erzeugung eines sehr effektiven Konzentrationsgradienten von Bindeharz und Fluorpolymer bei gleichzeitig hoher Härte der Beschichtung und sehr guter Zwischenhaftung zu den nachfolgenden Deckschichten wurde bisher nicht befriedigend gelöst.

Außerdem ist es bekannt, bimodale Dispersionen aus zwei PTFE unterschiedlichen Teilchengrößenverteilung als Deckschicht für die Antihaft-Beschichtung metallischen Gegenstände zu verwenden (EP-A-0 657 514).

Die der Erfindung zugrundeliegende Aufgabe bestand somit darin, Antihaftbeschichtungen für Gegenstände aus Metall, Keramik, Email oder Glas zu bekommen, die die aufgezeigten Nachteile des Standes der Technik vermeiden und insbesondere gleichzeitig gute Haftung auf dem Substrat und gute Zwischenhaftung zu der jeweils nachfolgenden Schicht sowie hohe Härte der Beschichtung ergeben. Erfindungsgemäß erfolgt die Lösung dieser Aufgabe in einem wenigstens zum Teil aus Metall, Keramik, Email oder Glas bestehenden Gegenstand mit einer Antihaftbeschichtung, die multimodale Fluorpolymere enthält und aus mindestens zwei Schichten mit einer Grundschicht direkt auf dem Substrat und einer Deckschicht besteht, wobei die Grundschicht ein Fluorpolymer und als Bindeharz wenigstens ein Polyamidimid-, Polyimid-, Polyethersulfon-, Polyphenylensulfid- oder Siliconharz oder eine Mischung wenigstens zweier derselben und die Deckschicht eine multimodale Mischung von nichtschmelzendem Fluorpolymer enthält und das Gewichtsverhältnis von Gesamtbindeharz zu Fluorpolymer in der Grundschicht 2 : 1 bis 1 : 4 beträgt. Erfindungsgemäß enthält die Grundschicht als Fluorpolymer wenigstens zwei die multimodale Mischung bildende Fluorpolymere unterschiedlicher Teilchengrößenverteilungen, und die Deckschicht ist frei von Bindeharz.

Die Verwendung der multimodalen Mischung von nichtschmelzendem Fluropolymer erzeugt einen effektiven Konzentrationsgradienten, ohne die beschriebenen Nachteile des Standes der Technik in Kauf nehmen zu müssen, und führt gleichzeitig durch Einsparung der teuren thermoplastischen TFE-Copolymeren zu einer Verbilligung der Beschichtungskosten.

Die Erfindung basiert auf der überraschenden Erkenntnis, daß der erfindungsgemäße Schichtenaufbau unter Verwendung einer multimodalen, d. h. mindestens zwei Teilchengrößenverteilungen enthaltenden PTFE-Dispersion oder Mischung separater PTFE-Typen mit mindestens zwei unterschiedlichen Partikelgrößenverteilungen eine deutliche Verbesserung der Substrathaftung auf lediglich gesäuberten metallischen, keramischen, email- oder glasartigen Substraten gegenüber den herkömmlichen Beschichtungen ergibt.

Zur Erzeugung eines verbesserten Konzentrationsgradienten innerhalb einer Antihaftbeschichtung ist es nach der Erfindung nicht notwendig, Fluorpolymere unterschiedlicher Schmelzviskosität zu kombinieren oder sehr hohe Anteile an Bindeharz zu verwenden, die die Zwischenhaftung zu den nachfolgenden fluorpolymerhaltigen Deckschichten negativ beeinflussen. Die Verwendung einer nichtschmelzenden PTFE-Mischung mit verschiedenen Teilchengrößenverteilungen (multimodale Mischung) führt bei gleichen Gewichtsverhältnissen von Bindeharz zu PTFE zu einer deutlichen Verbesserung der Substrathaftung gegenüber der Verwendung von monomodalen PTFE-Typen und vermeidet die im Falle einer Fluorpolymermischung mit unterschiedlichen Schmelzviskositäten einhergehende Verminderung der Härte der Beschichtung bei erhöhten Temperaturen. Die erfindungsgemäß eingesetzten, nicht mit üblichen Methoden aus der Schmelze verarbeitbaren, jedoch filmbildungsfähigen multimodalen PTFE-Typen umfassen sowohl Tetrafluorethylenhomopolymere als auch durch Hexafluorpropylen (HFP) oder Perfluoralkylvinylether (PAVE) modifizierte Typen. Auch können die erfindungsgemäß eingesetzten Fluorpolymere einen inhomogenen Aufbau der Polymerpartikel aufweisen, bestehend aus einem Kern, einer davon chemisch abweichenden inneren Hülle und einer wiederum abweichenden äußeren Hülle (qualitativ inhomogene Partikel). Dieser inhomogene Aufbau bezieht sich auch auf Fluorpolymerpartikel, bei denen sich der Kern und die anschließende Hülle oder Hüllen nur durch einen unterschiedlichen Gehalt an Modifier unterscheiden (quantitativ inhomogene Partikel). Durch die Erfindung kann weiterhin zum einen eine im Vergleich zur Verwendung von thermoplastischen Fluorpolymeren wesentlich preisgünstigere Beschichtungszusammensetzung erzeugt werden, zum anderen werden mangelnde Substrathaftung, wie im Falle von monomodalen Fluorpolymertypen, und ein starkes Nachlassen der Härte bei Gebrauchstemperaturen vermieden. Durch den Aufbau eines wirksameren Konzentrationsgradienten zwischen Bindeharz und multimodaler Fluorpolymerdispersion kann auf hohe Anteile an Bindeharz verzichtet werden, die im Falle von mehrschichtigen Antihaftaufbauten mit auf Fluorpolymeren basierenden Deckschichten eine verminderte Zwischenhaftung der Grundschicht zu den nachfolgenden Deckschichten verursacht hätten. Im Falle von dreischichtigen Antihaftbeschichtungen kann die Mittelschicht, die zwischen der Grundschicht (Primer) und der Deckschicht aufgetragen wird, mono- und multimodale thermoplastische perfluorierte Kohlenstoffpolymere, z. B. PFA oder FEP in Mischung mit multimodalem PTFE enthalten. Während der Stand der Technik einen Konzentrationsgradienten der thermoplastischen Fluorpolymere vom Primer über die Mittelschicht hin zur Deckschicht beschreibt, um ausreichende Substrathaftung und chemische sowie mechanische Widerstandsfähigkeit der Gesamtbeschichtung zu erzeugen, ist erfindungsgemäß in der Primerschicht der Einsatz dieser thermoplastischen Fluorpolymere nicht zwingend notwendig. Ein geringer Zusatz an mono- oder multimodalem thermoplastischem Fluorpolymer zu dem Anteil an nichtschmelzbarem, multimodalem PTFE in der Mittelschicht ist optional und bewirkt noch zusätzlich einen besseren Verbund einer mehrlagigen Antihaftbeschichtung und überraschenderweise eine nochmalige Verbesserung der Haftung des erfindungsgemäßen Primersystems. Die Deckschicht enthält multimodale, wie bimodale, Fluorpolymere.

Die erfindungsgemäßen Beschichtungen können auf metallische, keramische, email- oder glasartige Substrate aufgetragen werden, die keine aufwendige, kostenintensive und umweltbelastende Vorbehandlung, wie mechanische Aufrauhung, chemische Ätzung oder anorgansiche Hartstoffschichten, zur Haftungsverbesserung der Beschichtung voraussetzen und deren mittlere Oberflächenrauhigkeit < 2 µm sein kann. Weil eine Oberfläche mit zu großer Rauhigkeit durch eine aufgebrachte Beschichtung nur schwer egalisiert werden kann, ist eine solche aus optischen und/oder gebrauchstechnischen Gründen oftmals unerwünscht. Dies trifft insbesondere für Schneiden, Bügeleisensohlen oder Kopierrollen zu. Die erfindungsgemäßen Beschichtungen können beispielsweise drei Schichten umfassen, sind vorzugsweise wasserverdünnbar und beinhalten perfluorierte, mindestens bimodale Kohlenstoffpolymere in Kombination mit für den direkten Lebensmittelkontakt zugelassenen Bindeharzen. Die multimodalen perfluorierten Kohlenstoffpolymere können sowohl als wäßrige Dispersion als auch als Pulver in fester Form eingesetzt werden.

Eine beispielsweise bei der Erfindung brauchbare Disperion beinhaltet PTFE-Teilchen einer gegebenen Zusammensetzung gleicher Molmasse und gleicher Scherviskosität bei 372 °C, jedoch in zwei Größenverteilungen. Die größeren Partikel besitzen eine Teilchengrößenverteilung von 180 bis 400 nm, die kleineren Partikel erreichen Größenordnungen mit einer um den Faktor 0,3 bis 0,7 niedrigeren mittleren Teilchengröße, so daß die gesamte Dispersion eine nichtmonomodale Zahlenverteilung des Partikeldurchmessers besitzt.

Während der Trocknung der Beschichtung orientiert sich das Bindeharz in Richtung Substratoberfläche, während sich die Fluorpolymerteilchen aus Gründen der Minimierung der Oberflächenspannung in Richtung der Beschichtungsoberfläche orientieren. Im Idealfall kann für die Anordnung der Partikel eine kubisch- oder hexagonaldichteste Kugelpackung angenommen werden, deren Raumerfüllung 74 % beträgt. Diese theoretische, maximale Raumerfüllung von rund drei Vierteln des zur Verfügung stehenden Raumes ist die Ursache der bei nichtschmelzfähigen Fluorpolymeren (PTFE) beobachteten Mikroporosität. Während bei monomodalen, nichtschmelzfähigen Fluorpolymeren der verbleibende Zwischenraum zwischen den Fluorpolymerpartikeln mit Bindeharz zumindest teilweise aufgefüllt werden kann, da die vorliegende Partikelgrößenverteilung des Fluorpolymeren nicht in der Lage ist, diese Zwischenräume wirkungsvoll zu besetzen, ist dies bei der bimodalen Teilchengrößenverteilung möglich. Der Unterschied der Teilchengrößen ermöglicht es den Fluorpolymerteilchen, in die Zwischenräume der dichtesten Kugelpackung des Fluorpolymeren einzudringen und so eine noch bessere Ausbildung eines Konzentrationsgradienten hervorzurufen, so daß sich ein höherer Anteil an Bindeharz zur Substratoberfläche hin orientieren kann, da es nicht in den Zwischenräumen der Fluorpolymerteilchen verbleibt, und damit zur Haftungsverbesserung auf der Substratoberfläche zur Verfügung steht. Ferner stören bei monomodalen Fluorpolymeren die Bindeharzpartikel durch ihre Vermischung mit den Fluorpolymerteilchen die Ausbildung einer dichtesten Kugelpackung an Fluorpolymerpartikeln, so daß durch diese Störung die Beschichtung insgesamt eine höhere Mikroporosität besitzt und damit anfälliger gegenüber der Penetration von Korrosion verursachenden Substanzen ist. Die Wirkungsweise der Kombination von Fluorpolymermischungen mit unterschiedlichen Schmelzviskositäten kann ähnlich ebenfalls zwanglos erklärt werden. Hier erfolgt die Auffüllung der durch die Ausbildung einer dichtesten Kugelpackung aus PTFE-Partikeln verbleibenden Zwischenräume mit thermoplastischem Fluorpolymer. Das Modell der Ausbildung einer dichtesten Kugelpackung aus PTFE-Teilchen mit einer theoretisch 74 % betragenden Raumerfüllung erklärt ferner, warum bei der Kombination von monomodalem, nichtschmelzfähigem PTFE und monomodalen, thermoplastischen TFE-Copolymeren deren Anteile mindestens 30 Gew.% bezüglich des Gesamtgehaltes an Fluorpolymer sein müssen, um eine effektive Schichtenstruktur auszubilden.

Durch die erfindungsgemäße Ausbildung einer Schichtenstruktur unter Verwendung von multimodalen Fluorpolymeren in Kombination mit Bindeharzen wird die Substrathaftung auf metallischen, keramischen, emailartigen und glasartigen Substraten wesentlich verbessert, so daß die Oberflächen der zu beschichtenden Substrate nur einer Säuberung unterzogen werden müssen, die mögliche Kontaminationen durch haftungsverhindernde Verschmutzungen beseitigt. Selbstverständlich ist es möglich, die erfindungsgemäßen Beschichtungen auch auf mechanisch oder chemisch aufgerauhte Substratoberflächen sowie auf anorganische Hartstoffgrundierungen aufzubringen. Diese Arten der Substratvorbehandlung verbinden naturgemäß die chemische Haftung der Beschichtung mit einer mechanischen Verfestigung durch die stark zerklüftete Substratoberfläche, so daß in erster Linie mechanisch widerstandsfähigere Antihaftbeschichtungen erzeugt werden.

Bei Antihaftbeschichtungen mit multimodalem PTFE, die neben der direkt auf das Substrat aufgetragenen Primerschicht und der den Beschichtungsabschluß bildenden Deckschicht mindestens noch eine zwischen Primer und Deckschicht aufgetragenen Zwischenschicht beinhalten, kann dieser Zwischenschicht noch monomodales oder multimodales thermoplastisches TFE-Copolymer, wie PFA oder FEP, hinzugefügt werden. Die resultierende Mischung aus multimodalem PTFE und mono- oder multimodalem PFA oder FEP in der Zwischenschicht bewirkt zusätzlich noch eine Verbesserung der Substrathaftung und wirkt wie eine Klammer zwischen Primer und Deckschicht. Dieses Verhalten unterscheidet sich grundsätzlich von dem in der EP-A-0 056 280 und der EP-A-0 561 981 beschriebenen Konzentrationsgradienten, der von der Primerschicht über die Mittelschicht hin zur Deckschicht einen abnehmenden Gehalt an monomodalem thermoplastischem Fluorpolymer in Mischung mit monomodalem PTFE aufweist. Dieser in den genannten Druckschriften beschriebene Beschichtungsaufbau war notwendig, um ausreichende Substrathaftung und Gebrauchsbeständigkeit zu erhalten. In der erfindungsgemäßen Beschichtungszusammensetzung bewirkt die Hinzunahme von thermoplastischem mono- oder multimodalem TFE-Copolymer in der Mittelschicht in erster Linie eine nochmalige Verbesserung der Zwischenhaftung zwischen allen drei Schichten durch die partielle Penetration des thermoplastischen Fluorpolymers in die Bereiche der Grund- und der Deckschicht, die der Mittelschicht zugewandt sind. Der von der Mittelschicht ausgehende Konzentrationsgradient an thermoplastischem Fluorpolymer führt damit zu einer partiellen Verfestigung der Primerschicht und der Deckschicht durch die Mittelschicht. Multimodale, nichtschmelzende PTFE-Typen sind für diesen Effekt besonders empfänglich, da das thermoplastische Fluorpolymer die in den Lücken der dichtesten Kugelpackung stitzenden Teilchen zusätzlich verklebt und somit durch diese partielle Durchdringung der angrenzenden Schichten des Primers und der Deckschicht eine zusätzliche Verbesserung des Verbundes der Gesamtbeschichtung bewirkt.

Durch die Ausbildung einer PTFE-Schicht mit höherer Packungsdichte wird erfindungsgemäß darüber hinaus zusätzlich das Abriebverhalten positiv beeinflußt. Gegenüber vergleichbaren Beschichtungen auf der Basis monomodalen, nichtschmelzfähigen PTFE wird die Lebensdauer in Verschleißtests, wie z. B. dem nachfolgenden Nord-Test, durch multimodales, nicht-schmelzfähiges, jedoch filmbildungsfähhiges PTFE wesentlich verbessert.

Schmelzviskositäten von Fluorpolymeren können durch bekannte Techniken mittels eines Hochdruck-Kapillarviskosimeters oder Hochtemperaturrotationsviskosimeters bestimmt werden. Methoden sind z. B. in DE-A-4 340 943 beschrieben.

Die polymeren, hitzebeständigen Bindeharze sind diejenigen, die für den Einsatz im direkten Lebensmittelkontakt bis Temperaturen um 250 °C zugelassen sind, in erster Linie Polyamidimid-, Poly-(phenylensulfid)-, Polyimid-, Polyethersulfon- oder Siliconharze. Bevorzugt wird in der erfindungsgemäßen Beschichtungszusammensetzung ein Trionharz verwendet, das z. B. in der DE-A-2 414 389 beschrieben ist. Das erfindungsgemäße Beschichtungssystem weist gute Antihafteigenschaften gegenüber Lebensmitteln und sehr gute Haltbarkeit gegenüber mechanischen Belastungen auf. Diese können zuverlässig durch den Nord-Test ermittelt werden, der einen Abriebtest durch einen Schneebesen bei durchschnittlicher Gebrauchstemperatur der Kochware simuliert. Diese Methode wurde zum Beispiel in der Zeitschrift der Stiftung Warentest "test" 5/1987 und durch die Broschüren NT CONS 008 (1985-02) und Nordtest Remiss Nr. 467-83 der Firma Nordtest, Helsingfors (Finnland) veröffentlicht.

Die Oberflächenrauhigkeit der zu beschichtenden Substrate kann zuverlässig zum Beispiel mit einem Perthometer der Firma Feinprüf Perthen GmbH, Göttingen ermittelt werden.

Die typischen Oberflächenprofile von lediglich durch meist alkalische Entfettung vorbehandelten Aluminiumkochwaren variieren zwischen 0,5 bis 5 µm. Die Oberflächenprofile von Stahlsubstraten variieren etwas stärker, betragen meist jedoch weniger als 2 µm.

Wenn in der erfindungsgemäßen Antihaftbeschichtung zwischen der Grund- und der Deckschicht wenigstens eine Zwischenschicht angeordnet ist, die multimodales Fluorpolymer und Bindeharz enthält, ist es bevorzugt, daß das Gewichtsverhältnis von Bindeharz zu Fluorpolymer geringer als in der Grundschicht ist und im Falle mehrerer Zwischenschichten in diesen zu der Deckschicht hin abnimmt. Die mindestens eine Zwischenschicht enthält zweckmäßig thermoplastisches Fluorpolymer bis zu einem Anteil von 25 Gew.% des Gesamtgehaltes an Fluorpolymer.

Bevorzugte Konzentrationsbereiche der einzelnen Komponenten in den Schichten der erfindungsgemäßen Antihaftbeschichtung, mit Bezug auf den Festkörpergehalt, sind folgende:
- Grundschicht:: 6 bis 22 Gew.% Siliciumdioxid, 4 bis 11 Gew.% Verlaufsmittel, 5 bis 25 Gew.% Pigment, 20 bis 28 Gew.% Polyamidimid, 0 bis 5 Gew.% viskositätsmodifizierendes Mittel und 35 bis 55 Gew.% bimodales Polytetrafluorethylen.
- Zwischenschicht:: 70 bis 85 Gew.% mono- oder bimodales Polytetrafluorethylen, 10 bis 25 Gew.% PFA, 7 bis 9 Gew.% acrylisches Sinterhilfsmittel, 8 bis 12 Gew.% Verlaufsmittel, 0 bis 5 Gew.% viskositätsmodifizierendes Mittel und 0,3 bis 15 Gew.% Pigment sowie 1,2 bis 4,0 Gew.% Glimmer sowie 0 bis 20 Gew.-% Bindeharz.
- Deckschicht:: 90 bis 99 Gew.% bimodales Polytetrafluorethylen, 7 bis 9 Gew.% akrylisches Sinterhilfsmittel, 8 bis 12 Gew.% Verlaufsmittel, 0,3 bis 1,2 Gew. % Pigment, 0 bis 4 Gew. % viskositätsmodifizierendes Mittel sowie 2 bis 8 Gew.% Glimmer.

Die Grundschicht enthält bevorzugt 40 bis 70, besonders 50 bis 60 Gew.% multimodales, nichtschmelzendes Fluorpolymer.

Die Beschichtung kann durch Spritzen, Gießen oder Rollen appliziert werden. Die Gesamttrockenbeschichtungsstärke liegt zweckmäßig bei mindestens 18 µm. Besonders vorteilhaft ist es, die einzelnen Schichten in einer Weise auf dem Gegenstand aufzutragen, daß sie nicht komplett getrocknet werden, bevor die nächstnachfolgende Schicht aufgebracht wird. Die endgültige Beschichtung wird am Ende bei mindestens 380 °C getrocknet.

Die erfindungsgemäße Beschichtung wird durch die folgenden Beispiele und Testdaten charakterisiert. Die Fluorpolymer werden als wäßrige Dispersionen mit einem Festkörper von ca. 58 % (TF 5050) und 50 % (PFA 6900 N) bereitgestellt. Die Schichtzusammensetzungen wurden durch normale, dem Stand der Technik entsprechende Mischverfahren erzeugt und mit konventionellem Spritzverfahren auf lediglich entfettetes Aluminiumsubstrat aufgetragen.

Diese erfindungsgemäße Grundschicht (Primer) wird in Trockenfilmstärken von 6 bis 12 µm direkt auf das entfettete Substrat auflackiert u nd wenigstens 3 bis 1 min in einer Umlufttrockenanlage bei einer Umlufttemperatur von 100 bis 150 °C vorgetrocknet.

Auf die so erhaltene Primerschicht wird im Falle eines zweischichtigen Antihaftaufbaues eine Deckschicht in einer Trockenfilmstärke von 12 bis 18 µm auflackiert, die durch Beispiel 2 repräsentiert wird.

### Beispiel 1: Grundschichtformulierung

| **Komponente** | **Festkörper (%)** | **Gewichtsprozent in der Formulierung** |
|---|---|---|
| PAI - Trionharz 9020 (Hoechst AG) in wäßriger, aminneutralisierter Lösung | 15 | 39,3 |
| | | |
| Levasil 200 A (Kieselsol der Bayer AG) | 30 | 15,0 |
| | | |
| Ruß (Printex 60 der Degussas AG) in wäßriger Dispersion | 26 | 4,2 |
| | | |
| PTFE TF 5050 (bimodale PTFE-Dispersion, Dyneon GmbH) | 58 | 27,6 |
| | | |
| Triton X 100 (Octylphenolpolyetheralkohol, Rohm & Haas) | 100 | 1,0 |
| | | |
| Surfynol 440 (ethoxyliertes Acetylenglycol, Air Products and Chemicals) | 100 | 0,5 |
| | | |
| Deionisiertes Wasser | ------- | auf 100 Teile aufgefüllt |

### Beispiel 2: Deckschichtformulierung

| **Komponente** | **Festkörper (%)** | **Gewichtsprozent in der Formulierung** |
|---|---|---|
| PTFE TF 5050 | 58 | 72 |
| | | |
| Worleecryl 8043, wasserverdünnbare Acrylharzlösung (Worlee-Chemie GmbH) | 40 | 7,5 |
| | | |
| Mearlin sparkle (Costenoble) | 100 | 0,5 |
| | | |
| Triethanolamin | ------- | 2,2 |
| | | |
| Ruß (Printex 60 der Degussa AG) in wäßriger Dispersion | 26 | 0,2 |
| | | |
| Triton X 100 | ------- | 2,0 |
| | | |
| Surfynol 440 | ------- | 0,5 |
| | | |
| Xylol | ------- | 2,0 |
| | | |
| Deionisiertes Wasser | ------- | auf 100 Teile aufgefüllt |

Im Falle einer dreischichtigen Antihaftlackierung ist die Mittelschicht zwischen Primer und Deckschicht durch Beispiel 3 charakterisiert.

### Beispiel 3: Mittelschichtformulierung

| **Komponente** | **Festkörper (%)** | **Gewichtsprozent in der Formulierung** |
|---|---|---|
| PTFE TF 5050 | 58 | 56 |
| | | |
| PFA 6900 (Dyneon GmbH) | 50 | 16 |
| | | |
| Worleecryl 8043, wasserverdünnbare Acrylharzlösung (Worlee) | 40 | 8,0 |
| | | |
| Ruß (Printex 60 der Degussa AG) in wäßriger Dispersion | 26 | 0,2 |
| | | |
| Triton X 100 | ------- | 2,0 |
| | | |
| Surfynol 440 | ------- | 0,5 |
| | | |
| Triethanolamin | ------- | 4,0 |
| | | |
| Xylol | ------- | 1,5 |
| | | |
| Mearlin sparkle | 100 | 0,5 |
| | | |
| Deionisiertes Wasser | ------- | auf 100 Teile aufgefüllt |

Die Mittelschicht aus Beispiel 3 wird direkt auf die abgelüftete Primerschicht aus Beispiel 1 in einer Trockenfilmstärke von 5 bis 15 µm auflackiert, die Deckschicht des Beispiels 2 kann direkt auf die noch feuchte Mittelschicht des Beispiels 3 (Naß-in-naß-Lackierung) aufgetragen werden. Die so erzeugte dreilagige Antihaftbeschichtung wird 8 bis 4 min bei Umlufttemperaturen von 100 bis 150 °C abgelüftet und 5 bis 10 min bei 420 bis 400 °C Objekttemperatur eingebrannt. Es resultiert eine Antihaftbeschichtung mit einer Gesamttrockenfilmstärke von mindestens 18 und höchstens 40 µm, bevorzugt 25 bis 35 µm. Die erfindungsgemäßen Beschichtungszusammensetzungen können optional konventionelle oxidische farbgebende Pigmente sowie Extender enthalten, weiterhin Viskositätsmodifizierer sowie Adhäsionspromotoren.

### Testverfahren

Die erfindungsgemäßen zwei- und dreilagigen Antihaftbeschichtungen wurden in Testverfahren, die die typischen täglichen Beanspruchungen bei Koch-, Back- und Bratgeräten simulieren, gegen Wettbewerbsprodukte und eigene Produkte mit monomodalen Fluorpolymeren getestet.

### Prüfung auf Korrosionsbeständigkeit

Dazu wurden die Beschichtungen auf gewalztes Aluminiumblech 99.5 mit einer Rauhtiefe Ra = 0,35 bis 0,38 Am in der beschriebenen Weise aufgetragen und getrocknet. Anschließend wurde ein 2 mm-Gitterschnitt zehnmal mit Klebeband (TESA Standardfilm PP) im Winkel von 45° ruckartig abgerissen, nachdem mit dem Fingernagel fest angepreßt wurde, um einen maximalen Kontakt zur Beschichtung herzustellen. Die so behandelten Testbleche wurden 48 h in 10 %iger wäßriger Kochsalzlösung gekocht. Nach dieser Testprozedur wurde erneut ein 2 mm-Gitterschnitt angefertigt und ebenfalls zehnmal mit Klebeband abgerissen. Die Ergebnisse sind in Tabelle 4 aufgeführt.

### Beispiel 4: Korrosionsschutz

| | **Gitterschnittprüfung** | **Blasenbildung** |
|---|---|---|
| Erfindungsgemäße, zweischichtige Antihaftbeschichtung | kein Haftungsverlust | < 5 % der belasteten Fläche |
| | | |
| Erfindungsgemäße, dreischichtige Antihaftbeschichtung | kein Haftungsverlust | > 2 % der belasteten Fläche |
| | | |
| Zweischichtige Antihaftbeschichtung mit monomodalem PTFE | Haftungsverlust ca. 15 % | > 20 % der belasteten Fläche |
| | | |
| Dreischichtige Antihaftbeschichtung mit monomodalem PTFE | Haftungsverlust ca. 15 % | > 20 % der belasteten Fläche |

Zum Vergleich wurde in den erfindungsgemäßen Formulierungen die bimodale PTFE-Dispersion gegen eine herkömmliche, monomodale PTFE-Dispersion gleichen Festkörpers und gleicher Schmelzviskosität ausgetauscht. Die simultane Durchführung des Testes erbrachte einen Haftungsverlust von ca 15 % und eine wesentlich stärkere Blasenbildung > 20 % der belasteten Fläche bei den Aufbauten, die monomodale PTFE-Dispersion beinhalten.

### Allgemeiner Gebrauchstest

Ein beschleunigter allgemeiner Gebrauchstest kann wie folgt durchgeführt werden:
1. Aufbringen eines 2 mm-Gitterschnittes (wie oben beschrieben) und zehnmaliges, ruckartiges Abreißen von Klebeband.
2. Das Prüfobjekt wird mit Pflanzenöl eingerieben und anschließend mit heißer Haushaltsspülmittellösung ausgewaschen. Das Prüfobjekt wird auf Temperaturen zwischen 150 und 170 °C erhitzt. Auf dieser erhitzten Oberfläche wird ein Ei aufgeschlagen und ca. 9 min gebacken. Das gebackene Ei muß sich leicht und rückstandsfrei vom Boden lösen lassen.
3. Das Prüfobjekt wird auf Temperaturen zwischen 150 und 170 °C erhitzt. Nun wird handelsübliche Kondensmilch bodenbedeckend aufgebracht und so lange erhitzt, bis eine dunkelbraune Masse entstanden ist. Diese muß sich mit einem Kunststoffspatel rückstandsfrei entfernen lassen.
4. Das Prüfobjekt wird auf Temperaturen zwischen 150 und 170 °C erhitzt. Danach wird ein Teelöffel Haushaltszucker aufgebracht und so lange erhitzt, bis er karamelisiert und dunkelbraun ist. Das Prüfobjekt wird unter kaltem Wasser abgeschreckt und die Pfanne mit Wasser kurz aufgekocht. Es dürfen keine Rückstände verbleiben.
5. Das Prüfobjekt wird zu etwas mehr als die Hälfte mit einer 5 %igen Kochsalzlösung in Wasser befüllt. Danach wird das Prüfobjekt mit einem Deckel verschlossen und die Kochsalzlösung für 3 h unter Sieden erhitzt. Verdampfungsverluste werden mit Leitungswasser derart ausgeglichen, daß der Flüssigkeitsstand nur innerhalb einer Spannweite von 15 mm schwankt.
6. Handelsüblicher Tomatenketchup wird im Gewichtsverhältnis von 1 : 1 mit Leitungswasser vermischt, wobei ein Teelöffel Kochsalz pro Liter der Mischung hingefügt wird. Diese Mischung wird dann für 1 h gekocht, wobei der Verdampfungsverlust durch Leitungswasser ausgeglichen wird. Das Prüfobjekt wird anschließend mit heißer Spülmittellösung ausgewaschen. Die Beschichtung darf keinerlei Anzeichen von Blasenbildung oder Verfärbung aufweisen.
7. Eine Mischung aus 700 g Wasser, 200 g Essig, 100 g Pflanzenöl und 50 g Salz ist in dem Prüfobjekt 1 h zu kochen, wobei der Verdampfungsverlust durch Leitungswasser ausgeglichen wird. Anschließend ist das Prüfobjekt mit heißer Spülmittellösung auszuwaschen. Die Beschichtung darf keinerlei Anzeichen von Verfärbung oder Blasenbildung zeigen.
8. In dem Prüfobjekt wird Speiseöl für 2 h auf ca. 200 °C erhitzt. Anschließend wird das Objekt mit heißer Spülmittellösung ausgewaschen. Die Beschichtung darf keinerlei Anzeichen von Verfärbung oder Blasenbildung zeigen.
9. Eine 3 %ige Spülmittellösung (mit starkem Detergens wie z. B. Heija oder Somat) wird 1 h im Prüfobjekt gekocht, wobei Verdampfungsverluste durch Leitungswasser ausgeglichen werden. Die Beschichtung darf danach keinerlei Anzeichen von Blasenbildung oder Verfärbung zeigen.
10. Das Prüfobjekt wird zehnmal auf Temperaturen zwischen 150 und 180 °C erhitzt und sofort mit kaltem Wasser abgeschreckt. Die Beschichtung darf keinerlei Veränderung zeigen.
11. Das Prüfobjekt wird mit einer 2 %igen wäßrigen, heißen Lösung eines Haushaltsspülmittels gefüllt und über Nacht stehengelassen. Am nächsten Tag darf die Beschichtung keinerlei Blasenbildung zeigen.
12. Die unter Punkt 1 beschriebene Gitterschnittprüfung wird auf einem anderen Bereich der geprüften Oberfläche nochmals durchgeführt. Zusätzlich ist die Haftung durch Kratzen mit einem Fingernagel zu überprüfen. Ferner wir die geprüfte Beschichtung auf einer Länge von mindestens 25 mm mittels einer scharfen Klinge bis zum Substrat durchschnitten. Mit dem Daumennagel wird nun versucht, die Beschichtung im rechten Winkel zur Richtung des Schnittes abzuziehen. Es dürfen nicht mehr als 3 mm der Beschichtung bei zwei separaten Versuchen auf jeder Seite des Schnittes abgezogen werden.
13. Am unter Punkt 1 angefertigten Gitterschnitt werden nochmals zehn weitere Abrißversuche durchgeführt.

Nach Abschluß dieser Tests, die nacheinander mit dem gleichen Prüfobjekt durchgeführt werden, wird ein visueller Vergleich mit einem unbenutzten Objekt vorgenommen.

Die erfindungsgemäßen Zwei- und Dreischichtantihaftbeschichtungen absolvierten diesen Testzyklus ohne Beanstandungen. Die Blasenbildung der erfindungsgemäßen Beschichtungen ist gegenüber vergleichbaren Beschichtungen mit monomodalem PTFE bei gleichen Antihafteigenschaften deutlich vermindert.

### Abriebbeständigkeit

Die Abriebbeständigkeit der erfindungsgemäßen Antihaftaufbauten wurde durch den Nord-Test ermittelt. Dazu wurde ein lediglich mittels einer Detergenslösung gesäubertes Aluminiumsubstrat mit einer mittleren Rauhtiefe von Ra = 1,89 bis 2,3 µm mit einem erfindungsgemäßen dreischichtigen Antihaftaufbau und einem vergleichbaren Antihaftaufbau gleicher Zusammensetzung diesem Test unterzogen, wobei bei letzterem die bimodale PTFE-Dispersion durch eine monomodale PTFE-Dispersion gleicher Schmelzviskosität ersetzt wurde. Die angegebene Anzahl der Rotationszyklen bezieht sich auf einen Abtrag der Beschichtung bis zum Substrat. Die Trockenfilmstärken betragen 33 bis 35 µm.

### Beispiel 5: Ergebnisse des Nord-Tests (Verschleißprüfung)

| | |
|---|---|
| Erfindungsgemäßer dreischichtiger Antihaftaufbau | 3000 Zyklen |
| | |
| Dreischichtiger Antihaftaufbau, in dem das multimodale, nichtschmelzfähige PTFE durch monomodales, nichtschmelzfähiges PTFE gleicher molarer Masse ersetzt wurde | 1000 Zyklen |

## Patentansprüche

1. Wenigstens zum Teil aus Metall, Keramik, Email oder Glas bestehender Gegenstand mit einer Antihaftbeschichtung, die multimodale Fluorpolymere enthält und aus mindestens zwei Schichten mit einer Grundschicht direkt auf dem Substrat und einer Deckschicht besteht, wobei die Grundschicht ein Fluorpolymer und als Bindeharz wenigstens ein Polyamidimid-, Polyimid-, Polyethersulfon-, Polyphenylensulfid- oder Siliconharz oder eine Mischung wenigstens zweier derselben und die Deckschicht eine multimodale Mischung von nichtschmelzendem Fluorpolymer enthält und das Gewichtsverhältnis von Gesamtbindeharz zu Fluorpolymer in der Grundschicht 2 : 1 bis 1 : 4 beträgt, **dadurch gekennzeichnet**, das die Grundschicht als Fluorpolymer wenigstens zwei die multimodale Mischung bildende Fluorpolymere unterschiedlicher Teilchengrößenverteilung enthält und die Deckschicht frei von Bindeharz ist.

2. Gegenstand nach Anspruch 1, **dadurch gekennzeichnet**, daß zwischen der Grundschicht und der Deckschicht wenigstens eine Zwischenschicht angeordnet ist, die eine multimodale Mischung von Fluorpolymer und 0 bis 20 Gew.-% Bindeharz bezüglich des Festkörpers enthält, wobei das Gewichtsverhältnis von Bindeharz zu Fluorpolymer geringer als in der Grundschicht ist und im Falle mehrerer Zwischenschichten in diesen zu der den Beschichtungsabschluß bildenden Deckschicht hin abnimmt.

3. Gegenstand nach einem der Ansprüche 1 und 2, **dadurch gekennzeichnet**, daß das nichtschmelzende Fluorpolymer der multimodalen Mischung ein Tetrafluorethylenhomopolymer ist.

4. Gegenstand nach einem der Ansprüche 1 bis 3, **dadurch gekennzeichnet**, daß das nichtschmelzende Fluorpolymer der multimodalen Mischung ein mit Hexafluorpropylen oder Perfluoralkylvinylether modifiziertes Polytetrafluorethylen ist.

5. Gegenstand nach einem der Ansprüche 1 bis 4, **dadurch gekennzeichnet**, daß das nichtschmelzende Fluorpolymer der multimodalen Mischung aus qualitativ oder quantitativ inhomogenen Partikeln besteht.

6. Gegenstand nach einem der Ansprüche 1 bis 5, **dadurch gekennzeichnet**, daß mindestens eine Zwischenschicht thermoplastisches mono- oder multimodales Fluorpolymer bis zu einem Anteil von 25 Gew.% des Gesamtgehaltes an Fluorpolymer enthält.

7. Gegenstand nach Anspruch 6, **dadurch gekennzeichnet**, daß das thermoplastische Fluorpolymer ein Copolymer aus Perfluoralkylvinylether und Tetrafluorethylen (PFA) und/oder aus Hexafluorpropylen und Tetrafluorethylen (FEP) ist.

8. Gegenstand nach Anspruch 1, **dadurch gekennzeichnet**, daß die nichtgetrocknete Grundschicht 1,0 bis 4,0 Gew. % Siliciumdioxid, 1,0 bis 5,0 Gew. % Verlaufsmittel, 2,0 bis 12 Gew.% Pigment, 3,0 bis 6,5 Gew.% Polyamidimid, 0 bis 10 Gew.% viskositätsmodifizierende Mittel, 2,0 bis 12 Gew.% Koaleszierungsmittel und 6,0 bis 16 Gew.% bimodales Polytetrafluorethylen bezüglich 100 % Naßlack enthält.

9. Gegenstand nach einem der Ansprüche 1 bis 8, **dadurch gekennzeichnet**, daß wenigstens eine nichtgetrocknete Zwischenschicht 20 bis 36 Gew.% mono- oder bimodales Polytetrafluorethylen, 0 bis 15 Gew.% PFA, 0 bis 5 Gew.% acrylisches Sinterhilfsmittel, 2,0 bis 8,0 Gew.% Verlaufsmittel, 0 bis 8 Gew.% viskositätsmodifizierende Mittel und 0,3 bis 10 Gew.% Pigment, 0,5 bis 4,0 Gew.% Glimmer sowie 0 bis 10 Gew.% Bindeharz bezüglich 100 % Naßlack enthält.

10. Gegenstand nach einem der Ansprüche 1 bis 8, **dadurch gekennzeichnet**, daß die nichtgetrocknete Deckschicht 35 bis 45 Gew.% bimodales Polytetrafluorethylen, 0 bis 4 Gew.% acrylisches Sinterhilfsmittel, 2,0 bis 8,0 Gew.% Verlaufsmittel, 0 bis 1,5 Gew.% Pigment, 0 bis 10 Gew.% viskositätsmodifizierende Mittel sowie 0,5 bis 5 Gew.% Glimmer bezüglich 100 % Naßlack enthält.

11. Gegenstand nach einem der Ansprüche 1 bis 10, **dadurch gekennzeichnet**, daß seine zu beschichtende Oberfläche vor der Beschichtung eine mittlere Oberflächenrauhigkeit kleiner als 5 µm hat und frei von haftungsvermindernden Verunreinigungen ist.

12. Gegenstand nach einem der Ansprüche 1 bis 11, **dadurch gekennzeichnet**, daß die einzelnen Schichten auf den Gegenstand aufgetragen sind, ohne komplett getrocknet zu werden, bevor eine weitere nachfolgende Schicht aufgebracht wurde und die endgültige Beschichtung bei mindestens 380 °C getrocknet wurde.

13. Gegenstand nach einem der Ansprüche 1 bis 12, **dadurch gekennzeichnet**, daß die Gesamttrockenbeschichtungsstärke mindestens 18 µm beträgt.

14. Gegenstand nach einem der Ansprüche 1 bis 13, **dadurch gekennzeichnet**, daß die Grundschicht 35 bis 70, vorzugsweise 50 bis 60 Gew.% multimodale Mischung von nichtschmelzendem Fluorpolymer bezüglich ihres Festkörpers enthält.

## Claims

1. An article at least partially comprising metal, ceramic, enamel or glass, with an anti-adhesion coating which contains multimode fluoropolymers and comprises at least two layers with a base layer directly on the substrate and a top layer, wherein the base layer contains a fluoropolymer and as a binding resin at least one polyamideimide, polyimide, polyethersulphone, polyphenylene sulphide or silicone resin or a mixture of at least two thereof and the top layer contains a multimode mixture of non-melting fluoropolymer and the ratio by weight of the total binding resin to the fluoropolymer in the base layer is 2:1 to 1:4, characterised in that as the fluoropolymer the base layer contains at least two fluoropolymers of different particle size distribution, which form the multimode mixture, and the top layer is free from binding resin.

2. An article according to claim 1 characterised in that disposed between the base layer and the top layer is at least one intermediate layer which contains a multimode mixture of fluoropolymer and from 0 to 20% by weight of binding resin with respect to the solid, wherein the ratio by weight of binding resin to fluoropolymer is lower than in the base layer and in the case of a plurality of intermediate layers decreases therein to the top layer forming the coating termination.

3. An article according to one of claims 1 and 2 characterised in that the non-melting fluoropolymer of the multimode mixture is a tetrafluoroethylene homopolymer.

4. An article according to one of claims 1 to 3 characterised in that the non-melting fluoropolymer of the multimode mixture is a polytetrafluoroethylene which is modified with hexafluoropropylene or perfluoroalkylvinylether.

5. An article according to one of claims 1 to 4 characterised in that the non-melting fluoropolymer of the multimode mixture comprises qualitatively or quantitatively non-homogeneous particles.

6. An article according to one of claims 1 to 5 characterised in that at least one intermediate layer contains thermoplastic monomode or multimode fluoropolymer up to a proportion of 25% by weight of the total content of fluoropolymer.

7. An article according to claim 6 characterised in that the thermoplastic fluoropolymer is a copolymer of perfluoroalkylvinylether and tetrafluoroethylene (PFA) and/or hexafluoropropylene and tetrafluoroethylene (FEP).

8. An article according to claim 1 characterised in that the non-dried base layer contains 1.0 to 4.0 % by weight of silicon dioxide, 1.0 to 5.0 % by weight of levelling agent, 2.0 to 12 % by weight of pigment, 3.0 to 6.5 % by weight of polyamideimide, 0 to 10 % by weight of viscosity-modifying agent, 2.0 to 12 % by weight of coalescing agent and 6.0 to 16 % by weight of bimode polytetrafluoroethyelene with respect to 100 % wet lacquer.

9. An article according to one of claims 1 to 8 characterised in that at least one non-dried intermediate layer contains 20 to 36 % by weight of monomode or bimode polytetrafluoroethylene, 0 to 15 % by weight of PFA, 0 to 15 % by weight of acrylic sintering aid, 2.0 to 8.0 % by weight of levelling agent, 0 to 8 % by weight of viscosity-modifying agent and 0.3 to 10 % by weight of pigment, 0.5 to 4.0 % by weight of mica and 0 to 10 % by weight of binding resin with respect to 100 % wet lacquer.

10. An article according to one of claims 1 to 8 characterised in that the non-dried top layer contains 35 to 45 % by weight of bimode polytetrafluoroethylene, 0 to 4 % by weight of acrylic sintering aid, 2.0 to 8.0 % by weight of levelling agent, 0 to 1.5 % by weight of pigment, 0 to 10 % by weight of viscosity-modifying agent and 0.5 to 5 % by weight of mica with respect to 100 % wet lacquer.

11. An article according to one of claims 1 to 10 characterised in that prior to the coating operation its surface to be coated has a mean surface roughness of less than 5 µm and is free from adhesion-reducing impurities.

12. An article according to one of claims 1 to 11 characterised in that the individual layers are applied to the article without being completely dried before a further subsequent layer was applied and the definitive coating was dried at at least 380°C.

13. An article according to one of claims 1 to 12 characterised in that the total dry coating thickness is at least 18 µm.

14. An article according to one of claims 1 to 13 characterised in that the base layer contains 35 to 70, preferably 50 to 60 % by weight of a multimode mixture of non-melting fluoropolymer with respect to its solid.

## Revendications

1. Objet constitué au moins en partie par un métal, une céramique, de l'émail ou du verre et comportant un revêtement antiadhésif, qui contient des polymères fluorés multimodaux et est constitué par au moins deux couches comprenant une couche de base située directement sur le substrat et une couche de revêtement, et dans lequel la couche de base contient un fluoropolymère et, en tant que résine formant liant, au moins une résine polyamidimide, polyimide, polyéthersulfone, sulfure de polyphénylène ou silicone ou un mélange d'au moins deux de ces résines et la couche de revêtement contient un mélange d'un fluoropolymère non fusible et dans laquelle le rapport pondéral de l'ensemble de la résine formant liant au fluoropolymère dans la couche de base est compris entre 2:1 et 1:4, caractérisé en ce que la couche de base contient en tant que fluoropolymère au moins deux fluoropolymères, qui forment le mélange multimodal et ont des répartitions différentes de tailles de particules, et que la couche de revêtement ne comporte aucune résine formant liant.

2. Objet selon la revendication 1, caractérisé en ce qu'entre la couche de base et la couche de revêtement est disposée au moins une couche intercalaire, qui contient un mélange multimodal d'un fluoropolymère et 0 à 20 % en poids d'une résine formant liant par rapport au corps solide, et le rapport pondéral de la résine formant liant au fluoropolymère est inférieur à ce qu'il est dans la couche de base et, dans le cas de plusieurs couches intercalaires, diminue dans ces couches en direction de la couche de revêtement formant l'élément terminal du revêtement.

3. Objet selon l'une des revendications 1 et 2, caractérisé en ce que le fluoropolymère non fusible du mélange multimodal est un homopolymère de tétrafluoroéthylène.

4. Objet selon l'une des revendications 1 à 3, caractérisé en ce que le fluoropolymère non fusible du mélange multimodal est un polytétrafluoroéthylène modifié par de l'hexafluoropropylène ou du perfluoroalkylvinyléther.

5. Objet selon l'une des revendications 1 à 4, caractérisé en ce que le fluoropolymère non fusible du mélange multimodal est constitué par des particules hétérogènes du point de vue qualitatif ou quantitatif.

6. Objet selon l'une des revendications 1 à 5, caractérisé en ce qu'au moins une couche intercalaire contient un fluoropolymère thermoplastique monomodal ou multimodal en un pourcentage atteignant jusqu'à 25 % en poids de la teneur totale en fluoropolymère.

7. Objet selon la revendication 6, caractérisé en ce que le fluoropolymère thermoplastique est un copolymère de perfluoroalkylvinyléther et de tétrafluoroéthylène (PFA) et/ou d'hexafluoropropylène et de tétrafluoroéthylène (FEP).

8. Objet selon la revendication 1, caractérisé en ce que la couche de base non séchée contient 1,0 à 4,0 % en poids de bioxyde de silicium, 1,0 à 5,0 % en poids d'un agent nivelant et 2,0 à 12 % en poids d'un pigment, 3,0 à 6,5 % en poids de polyamidimide, 0 à 10 % en poids d'un agent modifiant la viscosité, 2,0 à 12 % en poids d'un agent de coalescence, 6,0 à 16 % en poids de polytétrafluoroéthylène bimodal, rapportés à 100 % de peinture humide.

9. Objet selon l'une des revendications 1 à 8, caractérisé en ce qu'au moins une couche intercalaire non séchée contient 20 à 36 % en poids de polytétrafluoroéthylène monomodal ou bimodal, 0 à 15 % en poids de PFA, 0 à 5 % en poids d'un agent auxiliaire de frittage acrylique, 2,0 à 8,0 % en poids d'un agent nivelant, 0 à 8 % en poids d'un agent modifiant la viscosité, et 0,3 à 10 % en poids d'un pigment, 0,5 à 4,0 % en poids de mica ainsi que 0 à 10 % en poids d'une résine formant liant, rapportés à 100 % de peinture humide.

10. Objet selon l'une des revendications 1 à 8, caractérisé en ce que la couche de revêtement non séchée contient 35 à 45 % en poids de polytétrafluoroéthylène bimodal, 0 à 4 % en poids d'un agent auxiliaire de frittage acrylique, 2,0 à 8,0 % en poids d'un agent nivelant, 0 à 1,5 % en poids de pigment, 0 à 10 % en poids d'un agent modifiant la viscosité ainsi que 0,5 à 5 % en poids de mica, rapportés à 100 % de peinture humide.

11. Objet selon l'une des revendications 1 à 10, caractérisé en ce que sa surface, qui doit être recouverte possède, avant le revêtement, une rugosité de surface moyenne inférieure à 5 µm et ne comporte aucune impureté réduisant l'adhérence.

12. Objet selon l'une des revendications 1 à 11, caractérisé en ce que les différentes couches sont déposées sur l'objet, sans être séchées complètement, avant qu'une autre couche suivante ait été appliquée et le revêtement définitif ait été séché à au moins 380°C.

13. Objet selon l'une des revendications 1 à 12, caractérisé en ce que l'épaisseur totale du revêtement sec est égale au moins à 18 µm.

14. Objet selon l'une des revendications 1 à 13, caractérisé en ce que la couche de base contient 35 à 70 et de préférence 50 à 60 % du mélange multimodal d'un fluoropolymère non fusible, rapporté à son corps solide.
